# EUROPÄISCHE PATENTSCHRIFT

(11) **EP 1 260 796 B1**
(45) Veröffentlichungstag und Bekanntmachung des Hinweises auf die Patenterteilung: **27.12.2006**
(21) Anmeldenummer: 02006741.9
(22) Anmeldetag: 23.03.2002
(51) Int. Cl.: G01D 11/24, F15B 15/28

(54) **Sensorgehäuse**
Sensor housing
Boîtier d'un capteur

(30) Priorität: 23.05.2001 DE 20108649 U
(43) Veröffentlichungstag der Anmeldung: 27.11.2002
(73) Patentinhaber: Bernstein AG, 32457 Porta Westfalica (DE)
(72) Erfinder: Franke, Arnd, 32469 Petershagen (DE); Hässler, Torsten, 32423 Minden (DE)
(74) Vertreter: Specht, Peter

(56) Entgegenhaltungen:
- DE-A- 19 653 222
- DE-C- 19 643 413
- DE-U- 29 812 609

## Beschreibung

Die vorliegende Erfindung betrifft einen Sensor nach dem Oberbegriff des Anspruches 1 sowie einen Sensor und ein Profilnutgehäuse nach dem Oberbegriff des Anspruches 2.

Sensoren und Profilnutgehäuse der gattungsgemäßen Art sind beispielsweise aus der DE 196 43 413 C2 bekannt. Bei der dort gezeigten Konstruktion ist das Sensorgehäuse innerhalb der Profilnut durch eine Feststellschraube fixierbar, konstruktive Mittel zur Erzielung einer definierten Einbaulage sind aber nicht vorgesehen.

Der Erfindung liegt die Aufgabe zugrunde, einen Sensor und ein Profilnutgehäuse zu schaffen, welche derart ausgestaltet sind, dass der Sensor auf einfache Weise in einer definierten Position montier- und aus dieser Position heraus auch wieder demontierbar ist.

Die Erfindung löst die Aufgabe durch den Gegenstand der Ansprüche 1 und 2.

Die Erfindung schafft einen Sensor mit einem Sensorgehäuse, welches einen sich axial im Bereich einer der Ecken des Sensorgehäuses erstreckenden Anschlag aufweist, welcher aufgrund dieser konstruktiv einfachen Ausgestaltung eine definierte Einbaulage des Sensors innerhalb der Profilnut gestattet. Im montierten Zustand liegt dieser Anschlag an einem korrespondierenden Anschlag im Aufnahmebereich der Profilnut an.

Der Sensor ist zur Aufnahme in einer Profilnut eines Profilnutgehäuse ausgelegt, die einen Einführabschnitt mit zwei zueinander parallelen Wandungen und einen sich an den Einführabschnitt anschließenden Aufnahmebereich für den Sensor aufweist, der im wesentlichen einen kreisförmigen Querschnitt hat.

Durch das vorteilhafte Zusammenspiel aus Sensor und Profilnutgehäuse ergibt sich eine leichte und unkomplizierte Möglichkeit zur Montage und Demontage des Sensors, die nachstehend unter Bezug auf die Fig. näher erläutert wird.

Vorteilhafte Ausgestaltungen sind den übrigen Unteransprüchen zu entnehmen.

Nachfolgend wird die Neuerung unter Bezug auf die Zeichnung näher beschrieben. Es zeigt:
Fig. 1 eine perspektivische Ansicht eines Sensorgehäuses;
Fig. 2 eine Darstellung des Einsetzens des Sensorgehäuse in eine Profilnut; und
Fig. 3a-d das Einsetzen des Sensorgehäuses in die Profilnut in vier aufeinanderfolgenden Schritten.

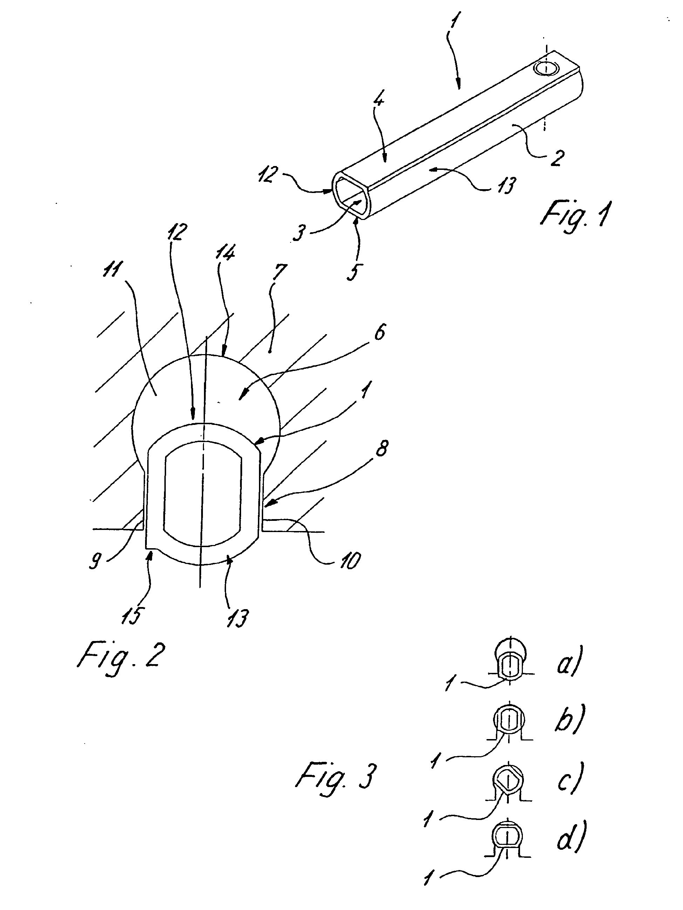

Fig. 1 zeigt ein Sensorgehäuse 1 mit einem Gehäuserohr 2, welches einen das Gehäuserohr 2 axial durchsetzenden Aufnahmeraum 3 für eine hier nicht dargestellte Sensorelektronik aufweist. Das Gehäuserohr 2 ist nach Art eines Hohlzylinders ausgebildet, der an zwei einander gegenüberliegenden Bereichen sich axial erstreckende Abflachungen 4, 5 aufweist.

Der Sensor mit dem derart ausgestalteten Sensorgehäuse 1 kann - wie in Fig. 2 und Fig. 3 ersichtlich - in eine Profilnut 6 eines Profilnutgehäuses 7 eines ansonsten nicht dargestellten Gerätes eingeschoben werden.

Die Profilnut weist einen Einführabschnitt 8 mit zwei zueinander parallelen Wandungen 9, 10 auf und einen sich an den Einführabschnitt 8 anschließenden Aufnahmebereich 11 für den Sensor, der einen kreisförmigen Querschnitt hat.

Es ist daher - wie in Fig. 3 zu erkennen - möglich, das Sensorgehäuse 1 zunächst derart auszurichten, daß die Abflachungen 4, 5 parallel zu den Wandungen 9, 10 ausgerichtet sind (Fig. 3a) und es derart durch den Einführabschnitt in den Aufnahmebereich 11 einzuschieben (Fig. 3b). Der Abstand der Wandungen 9, 10 voneinander ist derart ausgelegt, daß das Sensorgehäuse 1 in dieser Ausrichtung gerade eben durch den Einführabschnitt 8 führbar ist.

Im Aufnahmebereich 11 kann das Sensorgehäuse 1 sodann um seine axiale Längsachse um 90° gedreht werden (Fig. 3c), bis er in seiner Endstellung liegt, in welcher die Abflachungen 4, 5 senkrecht zu ihrer Einführstellung liegen, so daß die abgerundeten Seitenwandungen 12, 13 des Sensorgehäuses sich an die ebenfalls kreisförmige (zylindrischen) Innenwandung 14 des Aufnahmeraumes 11 anlegen (Fig. 3d).

In dieser Lage kommt der sich axial im Bereich einer der Ecken des Sensorgehäuses erstreckende Anschlag 15 an einem (hier nicht abgebildeten) korrespondierenden Anschlag im Aufnahmebereich 11 zur Anlage, so daß seine Stellung eindeutig definiert ist. In dieser Endstellung wird das Sensorgehäuse mit einem Gewindestift fixiert (z.B. M2). In dieser Einbaulage weist die aktive Seite des Sensors zum Magneten (nicht dargestellt). Das Sensorgehäuse 1 kann aufgrund seiner Geometrie nicht mehr aus der Profilnut 7 ausfallen. Der Ausbau erfolgt in umgekehrter Reihenfolge. Vorzugsweise umfaßt die Elektronik des Sensors eine Einrichtung zur Auswertung der Detektierung von im Profilnutgehäuse befindlichen Magneten (nicht dargestellt).

### Bezugszeichenliste

- Sensorgehäuse: 1
- Gehäuserohr: 2
- Aufnahmeraum: 3
- Abflachungen: 4, 5
- Profilnut: 6
- Profilnutgehäuse: 7
- Einführabschnitt: 8
- Wandungen: 9, 10
- Aufnahmebereich: 11
- Seitenwandungen: 12, 13
- Innenwandung: 14
- Anschlag: 15

## Patentansprüche

1. Sensor mit einem Sensorgehäuse (1) aus einem Gehäuserohr (2), welches einen das Gehäuserohr (2) axial durchsetzenden Aufnahmeraum (3), vorzugsweise für eine Sensorelektronik, aufweist und wobei das Gehäuserohr (2) nach Art eines Hohlzylinders ausgebildet ist, der an zwei einander gegenüberliegenden Bereichen sich axial erstreckende Abflachungen (4, 5) aufweist, **dadurch gekennzeichnet, dass** das Sensorgehäuse (1) einen sich axial im Bereich einer der Ecken des Sensorgehäuses (1) erstreckenden Anschlag (15) aufweist.

2. Sensor mit einem Sensorgehäuse (1) und Profilnutgehäuse (7) mit einer Profilnut (6) zur Aufnahme des Sensorgehäuses (1), wobei das Sensorgehäuse (1) aus einem Gehäuserohr (2) mit einem das Gehäuserohr (2) axial durchsetzenden Aufnahmeraum (3), vorzugsweise für eine Sensorelektronik, besteht und das Gehäuserohr (2) nach Art eines Hohlzylinders ausgebildet ist, der an zwei einander gegenüberliegenden Bereichen sich axial erstreckende Abflachungen (4, 5) aufweist und die Profilnut (6) des Profilnutgehäuses (7) einen Einführabschnitt (8) mit zwei zueinander parallelen Wandungen (9, 10) und einen sich an den Einführabschnitt anschließenden Aufnahmebereich (11) für den Sensor aufweist, der im wesentlichen einen kreisförmigen Querschnitt hat, **dadurch gekennzeichnet, dass** das Sensorgehäuse (1) einen sich axial im Bereich einer der Ecken des Sensorgehäuses (1) erstreckenden Anschlag (15) zur Anlage an einem korrespondierenden Anschlag im Aufnahmebereich (11) aufweist.

## Claims

1. Sensor comprising a sensor housing (1) consisting of a housing tube (2), which sensor housing has a receiving space (3), preferably for a sensor electronics, passing axially through the housing tube (2), and wherein the housing tube (2) is configured in the style of a hollow cylinder which, on two mutually opposing regions, has axially extending flattenings (4, 5), **characterized in that** the sensor housing (1) has a stop (15) extending axially in the region of one of the corners of the sensor housing (1).

2. Sensor comprising a sensor housing (1) and a profiled groove housing (7) having a profiled groove (6) for the reception of the sensor housing (1), wherein the sensor housing (1) consists of a housing tube (2) having a receiving space (3), preferably for a sensor electronics, passing axially through the housing tube (2), and the housing tube (2) is configured in the style of a hollow cylinder which, on two mutually opposing regions, has axially extending flattenings (4, 5), and the profiled groove (6) of the profiled groove housing (7) has a lead-in portion (8), having two mutually parallel walls (9, 10), and, adjoining the lead-in portion, a receiving region (11) of substantially circular cross-section for the sensor, **characterized in that** the sensor housing (1) has a stop (15), extending axially in the region of one of the corners of the sensor housing (1), for bearing contact against a corresponding stop in the receiving region (11).

## Revendications

1. Capteur comportant un boîtier de capteur (1) formé par un tube (2), qui comporte un logement (3) traversant le tube (2) dans le sens axial, de préférence pour une électronique de détection, et le tube (2) étant réalisé en forme de cylindre creux qui comporte des méplats (4, 5) qui s'étendent dans le sens axial sur deux zones opposées l'une à l'autre, **caractérisé en ce que** le boîtier de capteur (1) comporte une butée (15) qui s'étend dans le sens axial dans la zone de l'un des angles du boîtier de capteur (1).

2. Capteur comportant un boîtier de capteur (1) et un boîtier rainuré (7) muni d'une rainure profilée (6) destinée à recevoir le boîtier de capteur (1), ledit boîtier de capteur (1) étant formé par un tube (2), qui comporte un logement (3) traversant le tube (2) dans le sens axial, de préférence pour une électronique de détection, et le tube (2) étant réalisé en forme de cylindre creux qui comporte des méplats (4, 5) qui s'étendent dans le sens axial sur deux zones opposées l'une à l'autre, et la rainure profilée (6) du boîtier rainuré (7) comportant un tronçon d'introduction (8), avec deux parois (9, 10) parallèles entre elles, et une zone de réception (11), adjacente au tronçon d'introduction (8), pour le capteur qui a une section sensiblement circulaire, **caractérisé en ce que** le boîtier de capteur (1) comporte une butée (15) qui s'étend dans le sens axial dans la zone de l'un des angles du boîtier de capteur (1) et qui est destinée à venir en appui contre une butée correspondante dans la zone de réception (11).
